# EUROPÄISCHE PATENTSCHRIFT

(11) **EP 1 746 717 B1**
(45) Veröffentlichungstag und Bekanntmachung des Hinweises auf die Patenterteilung: **21.11.2018**
(21) Anmeldenummer: 06013428.5
(22) Anmeldetag: 29.06.2006
(51) Int. Cl.: H02P 21/14, H02P 21/04

(54) **Verfahren zur geberlosen Drehzahlbestimmung einer Asynchronmaschine**
Method for sensorless speed estimation of an asynchronous induction machine
Procédé d'estimation de la vitesse d'une machine asynchrone sans capteur

(30) Priorität: 21.07.2005 DE 102005034243
(43) Veröffentlichungstag der Anmeldung: 24.01.2007
(73) Patentinhaber: Jungheinrich Aktiengesellschaft, 22047 Hamburg (DE)
(72) Erfinder: Aleyt, Christian, Dipl.-Ing., 22337 Hamburg (DE); Hansen, Nils-Peter, Dipl.-Ing., 24114 Kiel (DE); Hörmann,Frank, Dipl.-Ing., 24259 Westensee (DE); Hunte, Torsten, Dr.-Ing., 22589 Hamburg (DE)
(74) Vertreter: Hauck Patentanwaltspartnerschaft mbB

(56) Entgegenhaltungen:
- EP-A- 1 049 245
- WO-A-02/06076
- KASA N ET AL: "An estimating method of instantaneous load torque by wavelet transform for the induction motor drive" ADVANCED MOTION CONTROL, 1996. AMC '96-MIE. PROCEEDINGS., 1996 4TH INT ERNATIONAL WORKSHOP ON MIE, JAPAN 18-21 MARCH 1996, NEW YORK, NY, USA,IEEE, US, Bd. 1, 18. März 1996 (1996-03-18), Seiten 321-325, XP010164153 ISBN: 978-0-7803-3219-5
- KYO-BEUM LEE ET AL: "Performance improvement of sensorless vector control for induction motor drives fed by matrix converter using nonlinear model and disturbance observer" POWER ELECTRONICS SPECIALISTS CONFERENCE, 2004. PESC 04. 2004 IEEE 35T H ANNUAL AACHEN, GERMANY 20-25 JUNE 2004, PISCATAWAY, NJ, USA,IEEE, US, 20. Juni 2004 (2004-06-20), Seiten 1341-1347, XP010739689 ISBN: 978-0-7803-8399-9
- HOLTZ J: "Speed estimation and sensorless control of AC drives" INDUSTRIAL ELECTRONICS, CONTROL, AND INSTRUMENTATION, 1993. PROCEEDING S OF THE IECON '93., INTERNATIONAL CONFERENCE ON MAUI, HI, USA 15-19 NOV. 1993, NEW YORK, NY, USA,IEEE, 15. November 1993 (1993-11-15), Seiten 649-654, XP010109145 ISBN: 978-0-7803-0891-6

## Beschreibung

Die vorliegende Erfindung bezieht sich auf ein Verfahren zur geberlosen Drehzahlbestimmung einer Asynchronmaschine, insbesondere für Flurförderzeuge.

Aus DE 4042041 A1 ist ein Flurförderzeug mit einem Gleichstrommotor in Reihenschlußausführung ohne zusätzliche Sensoren zur Drehzahlerfassung bekannt.

Asynchron- oder Synchronmotoren zeichnen sich gegenüber Gleichstrommotoren durch eine wartungsfreie und robuste Technik aus. Asynchronmaschinen besitzen zudem eine vergleichsweise einfache Regelung.

Aus WO 02/06076 A2 ist ein Verfahren zur sensorlosen Antriebsregelung eines Elektrofahrzeugs bekannt, bei dem der Ständerstrom abhängig von den erfaßten IstWerten für die Flußverkettung, das Drehmoment und die gemessenen Leiterströme ermittelt wird. Zur Bestimmung der Flußverkettung wird ein Motormodell eingesetzt, das die Drehzahl und das Drehmoment ermittelt.

Aus dem Tagungsband zur 27. jährlichen Konferenz der IEEE Industrial Electronic Society, IECON, Denver, Colorado vom 27. November bis zum 2. Dezember 2001 ist ein Tutorial von Joachim Holtz mit dem Titel "Sensorless Speed and Position Control of Induction Motors" bekannt. Das Tutorial stellt eine Reihe von Modellen vor, die es erlauben, ohne Drehzahlerfassung die Drehzahl zu berechnen. Insbesondere wird zwischen rückgekoppelten und nicht rückgekoppelten Beobachtern für den magnetischen Fluß unterschieden. Eine Übersicht der geberlosen Drehzahlbestimmung und Regelung der Drehstromantriebe ist in folgendem Artikel darstellt: Holtz J. "Speed estimation and sensorless control of AC drives",INDUSTRIAL ELECTRONICS, CONTROL, AND INSTRUMENTATION, 1993. PROCEEDING S OF THE IECON '93., INTERNATIONAL CONFERENCE ON MAUI, HI, USA 15-19 NOV. 1993, NEW YORK, NY, USA,IEEE, 15. November 1993 (1993-11-15), Seiten 649-654, XP010109145, ISBN: 978-0-7803-0891-6.

Der Erfindung liegt die Aufgabe zugrunde, eine Regelung für eine Asynchronmaschine zu schaffen, die auf einen Drehzahlsensor oder einen Inkrementalgeber verzichtet und gleichzeitig eine robuste und einfache Regelung gestattet.

Erfindungsgemäß wird die Aufgabe durch das Verfahren mit den Merkmalen aus Anspruch 1 gelöst. Vorteilhafte Ausgestaltungen bilden die Gegenstände der Unteransprüche.

Das erfindungsgemäße Verfahren verwendet die feldorientierte Regelung zur Ansteuerung der Asynchronmaschine. Eingangsgröße ist eine vorgegebene Drehzahl für die Asynchronmaschine, wobei der Soll-Wert für die Drehzahl beispielsweise durch einen Fahrtgeber eines Flurförderzeuges bestimmt wird. Neben dem Soll-Wert für die Drehzahl liegen an dem Modul zur feldorientierten Regelung zwei gemessene Werte für den Leiterstrom sowie eine von einem Beobachtermodul berechnete Drehzahl an. Das Beobachtermodul berechnet mit Hilfe von Größen, die die feldorientierte Regelung bereitstellt, einen Wert für die Drehzahl, der als Ist-Wert an die feldorientierte Regelung weitergeleitet wird. Erfindungsgemäß liegen an dem Beobachtermodul Werte des momentbildenden Stromzeigers *îsq(t)* sowie die Spannungen *usa(t)* und *usb(t)* aus der feldorientierten Regelung an. Alternativ können auch die gemessenen Leiterspannungen der Asynchronmaschine anliegen. Der feldorientierten Regelung steht die Vektorgröße, also Länge und Richtung, des momentbildenden Stroms zur Verfügung. Ein Momentenmodul berechnet bei dem erfindungsgemäßen Verfahren, beispielsweise durch Iteration, einen aus der aktuellen Differenz des momentbildenden Stroms *îsq(t)* des Beobachtermoduls und des momentbildenden Stroms *îsq(t)* der feldorientierten Regelung einen Wert für das auf die Maschine wirkende Lastmoment *Ml(t).* Das Momentenmodul berechnet aus der Differenz dieser Stromwerte, ausgehend von einem Startwert, die vollständige Vorgabe des Lastmoments für das Drehzahlmodul.

Der Erfindung liegt die Erkenntnis zugrunde, daß in der an sich bekannten feldorientierten Regelung kein Wert explizit das innere Moment oder das Lastmoment angibt. Lastmoment und inneres Moment sind lediglich implizit durch den momentbildenden Stromzeiger *îsq(t),* die Struktur des Gleichungssystems sowie durch die Eingangsgrößen bekannt.

Ausgehend von den Spannungswerten, der feldorientierten Regelung *usa(t)* und *usd(t)* oder den gemessenen Leiterspannungen berechnet das Beobachtermodul das innere Moment der angesteuerten Asynchronmaschine. Aus der Differenz der momentbildenden Ströme bestimmt das Momentenmodul das auf die Maschine wirkende Lastmoment, wobei die Fehlergröße iterativ minimiert wird, so daß das System der feldorientierten Regelung und das Beobachtersystem miteinander abgeglichen sind. Aus diesen Werten für die Momente wird bei dem erfindungsgemäßen Verfahren im Drehzahlmodul iterativ die Drehzahl berechnet und an die feldorientierte Regelung angelegt. Während der Iteration konvergiert die ermittelte Drehzahl gegen ihren wahren Wert.

Das erfindungsgemäße Verfahren bietet den Vorteil, daß es über den gesamten Drehzahlbereich hochdynamisch einen korrekten Wert für die Drehzahl liefert.

Das erfindungsgemäße Verfahren wird nachfolgend anhand von einem Ausführungsbeispiel näher erläutert.

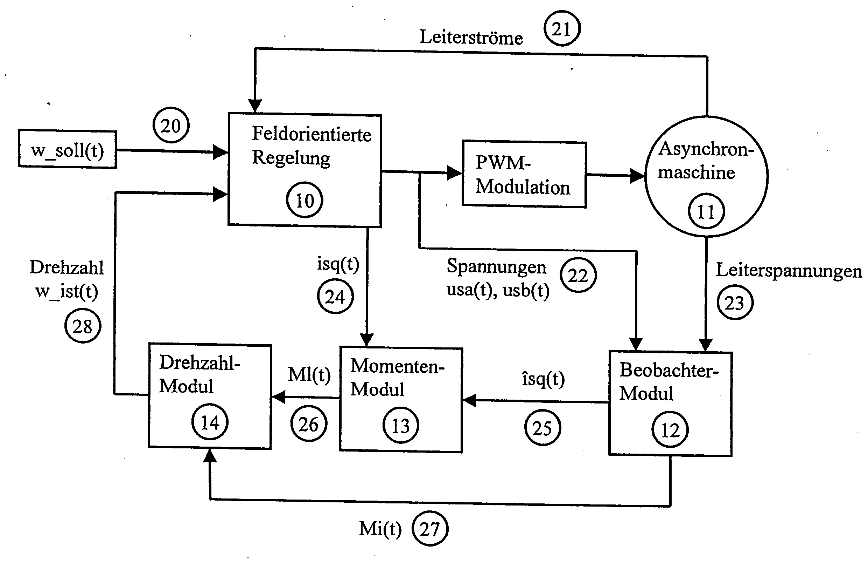

Figur 1 zeigt in einem schematischen Blockschaltbild eine feldorientierte Regelung 10, deren Ausgangswerte die pulsweitenmodulierten Spannungen 22 für die Asynchronmaschine 11 darstellt. Die Eingangsgrößen für die feldorientierte Regelung 10 bilden der Drehzahl-Soll-Wert *ω_soll* 20 und der mit *ω_ist* bezeichnete Drehzahl-Ist-Wert 28. Ferner liegen an der feldorientierten Regelung 10 zwei gemessene Leiterströme 21 der Asynchronmaschine 11 an.

Der Drehzahl-Istwert wird durch drei Module 12, 13 und 14 berechnet. Modul 12 stellt ein Beobachtermodul dar, das die von der feldorientierten Regelung 10 zur Ansteuerung der Asynchronmaschine 11 ermittelten Spannungswerte 22 *usa(t)* und *usb(t)* oder die gemessenen Leiterspannungen 23 verwendet, um ein Modell der Maschine zu berechnen.

Bei der feldorientierten Regelung 10 wird der Zeiger des momentbildenden Stroms *îsq(t)* über einen Regler direkt dem geforderten realen Moment angepaßt. Die feldorientierte Regelung 10 übergibt mit dem Wert 24 den momentbildenden Stromzeiger *îsq(t)* an das Momentenmodul 13. Weiterhin wird dem Momentenmodul 13 mit dem Wert 25 der vom Beobachtermodul berechnete momentbildende Stromzeiger *îsq(t)* übergeben. Aus der Differenz dieser beiden Stromzeiger bestimmt das Momentenmodul 13 das auf die Asynchronmaschine wirkende Lastmoment *M1(t)* 26.

Modul 14 stellt ein Drehzahlmodul dar. Die Eingangsgrößen bilden das vom Momentenmodul 13 bestimmte Lastmoment *M1(t)* 26 und das vom Beobachtermodul 12 ermittelte innere Moment *Mi(t)* 27. Aus diesen Werten berechnet das Drehzahlmodul 14 die aktuelle Drehzahl *ω_ist(t)* 28 der Asynchronmaschine, die der feldorientierten Regelung 10 zugeführt wird.

Hierdurch wird die Differenz der momentbildenden Ströme von feldorientierter Regelung 10 und Beobachtermodul 12 minimiert und somit diese beiden Systeme miteinander abgeglichen. Die berechnete Drehzahl *ω_ist(t)* 28 konvergiert dabei gegen den wahren Wert und kann für die Regelung der Asynchronmaschine verwendet werden.

Das beschriebene Verfahren zur geberlosen Drehzahlbestimmung einer Asynchronmaschine kann zur Verbesserung der dynamischen Eigenschaften unter realen Bedingungen erweitert werden.

Das Momentenmodul 13 kann durch einen adaptiven PI-Regler realisiert werden. Die Reglerverstärkungen werden hierbei proportional zu einer Adaptionsgröße verändert. Als Adaptionsgrößen können die elektrische Aufnahmeleistung *P(t),* berechnet aus den Größen der feldorientierten Regelung 10, oder die Drehzahl-Regelabweichung
*ω_soll*(t) - *ω_ist(t)* verwendet werden. Hohe Aufnahmeleistungen beziehungsweise große Regelabweichungen führen somit zu hohen Reglerverstärkungen und damit zu einer stärkeren Gewichtung der zu minimierenden Differenz zwischen dem momentbildenden Strom *îsq(t)* der feldorientierten Regelung 10 und dem des Beobachtermoduls 12 *îsq(t).*

Für die Berechnung der aktuellen Drehzahl der Asynchronmaschine über die von Beobachtermodul 12 und Momentenmodul 13 ermittelten Momente (inneres Moment *Mi(t)* 27 und Lastmoment *M1(t)* 26) wird die Massenträgheit des Gesamtsystems benötigt. Diese ist in der Regel nicht bekannt und veränderlich. Aus der elektrischen Aufnahmeleistung *P(t)* sowie der Drehzahl-Regeldifferenz *ω_soll*(t) - *ω_ist(t)* ist ersichtlich wie schnell das Fahrzeug der Drehzahl-Sollwertvorgabe folgt. Hieraus kann auf die Massenträgheit des Fahrzeuges geschlossen und diese bei der Drehzahlberechnung im Drehzahlmodul 14 berücksichtigt werden.

Beim Durchtritt durch die Drehzahl Null, wie er beim Fahrtrichtungswechsel auftritt, werden Einschwingvorgänge hauptsächlich im vom Beobachtermodul 12 berechneten magnetischen Rotorfluß deutlich, was zu Schwingungen in der ermittelten Drehzahl 28 führen kann. Durch Variation der für die Berechnungen im Beobachtermodul 12 verwendeten Hauptinduktivität der Asynchronmaschine 11 kann der zeitliche Verlauf des magnetischen Rotorflusses geglättet und somit die Schwingungen deutlich reduziert werden. Insbesondere wirkt sich eine Absenkung der Hauptinduktivität bei hohen Schlupffrequenzen positiv auf das Fahrverhalten aus.

Beim Betrieb des Fahrzeugs an Steigungen kann unter Umständen bei Fahrtrichtungswechsel mit kleinen Drehzahlsollwerten 20 der Fall auftreten, daß das durch die feldorientierte Regelung 10 erzeugte Drehfeld bei sehr kleinen Frequenzen verharrt, wodurch das Fahrzeug nicht mehr auf Sollwertvorgaben reagiert und stehen bleibt. Bedingt wird dieses Verhalten durch die Verwendung der berechneten Drehzahl 28. Dies unerwünschte Verharren der feldorientierten Regelung wird durch kurzzeitiges zu Null setzen des vorgegebenen Lastmoments *Ml(t)* überwunden. Wird durch Auswertung der Ansteuersignale für die Asynchronmaschine ein solcher Zustand erkannt, so kann eine kontrollierte Rückkehr in den vorgesehenen Betriebszustand dadurch erreicht werden, daß das Momentenmodul 13 für eine bestimmte Zeitdauer zurückgesetzt wird. Das Drehzahlmodul 14 arbeitet während dieser Zeit mit dem Lastmoment Null weiter.

Der Übergang des beschriebenen Systems zur geberlosen Drehzahlbestimmung vom motorischen in den generatorischen Betrieb kann erleichtert werden durch eine betragsmäßige Vergrößerung der berechneten Drehzahl 28 um einige Prozente, solange die aus den gemessenen Leiterströmen 21 und den gemessenen Leiterspannungen 23 berechnete Wirkleistung bereits negativ ist (generatorischer Betrieb), sich die feldorientierte Regelung 10 jedoch gleichzeitig noch im motorischen Betrieb befindet. Die aktuelle Betriebsart der Regelung 10 läßt sich durch Auswertung der Vorzeichen von Drehzahl 28 und Schlupffrequenz bestimmen.

## Patentansprüche

1. Verfahren zur geberlosen Drehzahlbestimmung einer Asynchronmaschine, das die folgenden Verfahrensschritte aufweist:
- ein Modul (10) zur feldorientierten Regelung berechnet die an der Asynchronmaschine (11) anzulegenden Spannungen (22) ausgehend von einem Soll-Wert für die Drehzahl (20), mindestens zwei gemessenen Werten für den Leiterstrom (21) und einer von einem Drehzahlmodul (14) berechneten Drehzahl (28),
- an dem Beobachtermodul (12) liegen die Spannungswerte (22) aus der feldorientierten Regelung (10) oder die gemessenen Spannungswerte (23) an, das aus den anliegenden Werten einen Wert für den momentbildenden Strom *îsq(t)* (25) und ein inneres Moment *Mi(t)* (27) der Asynchronmaschine ermittelt,
- ein als adaptiver PI-Regler ausgeführtes Momentenmodul (13) berechnet aus der Differenz der momentbildenden Ströme aus der feldorientierten Regelung (10) und dem Beobachtermodul (12) ein auf die Asynchronmaschine (11) wirkendes Lastmoment *Ml(t)* (26), wobei die Reglerverstärkungen über die Drehzahlabweichung verändert werden und große Regelabweichungen zu hohen Reglerverstärkungen führen,
- ein Drehzahlmodul (14) berechnet über das Lastmoment (26) des Momentenmoduls (13) und das innere Moment (27) des Beobachtermoduls (12) die aktuelle Drehzahl (28) der Asynchronmaschine.

2. Verfahren nach Anspruch 1, **dadurch gekennzeichnet, daß** die berechnete Drehzahl der feldorientierten Regelung als aktuelle Drehzahl der Asynchronmaschine übergeben wird.

3. Verfahren nach Anspruch 1 und 2, **dadurch gekennzeichnet, daß** die für die Berechnungen im Beobachtermodul (12) angesetzte Hauptinduktivität der Asynchronmaschine zeitlich verändert wird, um Schwingungen des vom Beobachtermodul (12) berechneten magnetischen Rotorflusses zu dämpfen.

4. Verfahren nach Anspruch 1 und 2, **dadurch gekennzeichnet, daß** bei unerwünschtem Verharren der feldorientierten Regelung (10) bei kleinen Drehfeldfrequenzen das dem Drehzahlmodul (14) vorgegebene Lastmoment *Ml(t)* (26) für ein Zeitintervall zu Null gesetzt wird, um zu einem vorgesehenen Betriebszustand zurückzukehren.

5. Verfahren nach Anspruch 1 und 2, **dadurch gekennzeichnet, daß** für die Berechnung der Drehzahl (28) im Drehzahlmodul (14) die Massenträgheit des Fahrzeugs anhand der elektrischen Aufnahmeleistung oder der Drehzahl-Regeldifferenz verändert wird.

6. Verfahren nach Anspruch 1 und 2, **dadurch gekennzeichnet, daß** ein Übergang des Regler-Beobachter-Systems in den generatorischen Betrieb erleichtert wird, indem die der feldorientierten Regelung (10) übergebene Drehzahl (28) betragsmäßig vergrößert wird, solange die aus den gemessenen Leiterströmen (21) und den gemessenen Leiterspannungen (23) berechnete Wirkleistung negativ ist und sich gleichzeitig die Regelung (10) noch im motorischen Betrieb befindet.

7. Verfahren nach einem der Ansprüche 1 bis 6, **dadurch gekennzeichnet, daß** der Sollwert für die Drehzahl (20) durch einen Fahrtgeber erfolgt.

8. Verfahren nach einem der Ansprüche 1 bis 7, **dadurch gekennzeichnet, daß** die Asynchronmaschine (11) zum Antrieb eines Flurförderzeugs dient.

9. Verfahren nach einem der Ansprüche 1 bis 8, **dadurch gekennzeichnet, daß** das Momentenmodul (13) die Fehlergröße zu Null oder annähernd zu Null bestimmt.

10. Verfahren nach einem der Ansprüche 1 bis 9, **dadurch gekennzeichnet, daß** an dem Beobachtermodul (12) die Spannungswerte (22) der feldorientierten Regelung (10) im ständerfesten Koordinatensystem anliegen oder bei der Verwendung der gemessenen Spannungswerte (23) diese hierfür in ständerfeste Koordinaten transformiert werden.

## Claims

1. A method for sensorless speed estimation of an asynchronous machine having the following method steps:
- a module (10) for field-oriented control calculates the voltages (22) to be applied to the asynchronous machine (11) based on a target value for the rotational speed (20), at least two measured values for the phase current (21), and a rotational speed (28) calculated by a rotational speed module (14),
- the voltage values (22) from the field-oriented control (10) or the measured voltage values (23) are applied to the observer module (12) which determines a value for the torque-forming current *îsq(t)* (25) and an inner torque *Mi(t)* (27) of the asynchronous machine from the applied values,
- a torque module (13) configured as an adaptive PI controller calculates a load torque *Ml(t)* (26) acting on the asynchronous machine (11) from the difference between torque-forming currents from the field-oriented control (10) and the observer module (12), wherein the controller gains are changed by the deviation in rotational speed, and large control deviations lead to high controller gains,
- a rotational speed module (14) calculates the current rotational speed (28) of the asynchronous machine by means of the load torque (26) of the torque module (13), and the inner torque (27) of the observer module (12).

2. The method according to claim 1, **characterized in that** the calculated rotational speed of the field-oriented control is transmitted as the current rotational speed of the asynchronous machine.

3. The method according to claims 1 and 2, **characterized in that** the main inductance of the asynchronous machine used for the calculations in the observer module (12) is changed over time in order to dampen oscillations in the magnetic rotor flux calculated by the observer module (12).

4. The method according to claims 1 and 2, **characterized in that** when the field-oriented control (10) undesirably jams in the event of small rotating field frequencies, the load torque *Ml(t)* (26) specified for the rotational speed module (14) is set to zero for a moment in order to return to a specified operating state.

5. The method according to claims 1 and 2, **characterized in that** to calculate the rotational speed (28) in the rotational speed module (14), the inertia of the vehicle is changed using the electrical power input or the rotational speed control difference.

6. The method according to claims 1 and 2, **characterized in that** a transition of the controller/observer system to the generator mode is facilitated **in that** the rotational speed (28) transmitted to the field-oriented control (10) is increased in amount as long as the active power calculated from the measured phase currents (21) and the measured phase voltages (23) is negative, and the control (10) is simultaneously still in motor mode.

7. The method according to one of claims 1 to 6, **characterized in that** the target value for the rotational speed (20) is produced by a motion controller.

8. The method according to one of claims 1 to 7, **characterized in that** the asynchronous machine (11) serves to drive for an industrial truck.

9. The method according to one of claims 1 to 8, **characterized in that** the torque module (13) determines the size of the error at zero or nearly at zero.

10. The method according to one of claims 1 to 9, **characterized in that** the voltage values (22) of the field-oriented control (10) in the stator-fixed coordinate system are applied to the observer module (12), or they are transformed into stator-fixed coordinates for this purpose when the measured voltage values (23) are used.

## Revendications

1. Procédé d'estimation sans capteur de la vitesse de rotation d'une machine asynchrone, comprenant les étapes de procédé suivantes :
- un module (10) pour la régulation orientée champ calcule les tensions (22) à appliquer à la machine asynchrone (11) à partir d'une valeur de consigne pour la vitesse de rotation (20), d'au moins deux valeurs mesurées pour le courant de conducteur (21) et d'une vitesse de rotation (28) calculée par un module de vitesse de rotation (14),
- les valeurs de tension (22) issues du module de régulation orientée champ (10) ou les valeurs de tension mesurées (23) sont appliquées au module d'observateur (12), lequel détermine une valeur pour le courant produisant un couple *îsq(t)* (25) et un couple interne *Mi(t)* (27) de la machine asynchrone à partir des valeurs appliquées,
- un module de couple (13) conçu comme un régulateur PI adaptatif calcule un couple de charge *MI(t)* (26) agissant sur la machine asynchrone (11) à partir de la différence entre les courants produisant un couple provenant du module de régulation orientée champ (10) et du module d'observateur (12), les amplifications de régulateur étant modifiées par l'écart de la vitesse de rotation et les écarts de régulation importants entraînant des amplifications de régulateur élevées,
- un module de vitesse de rotation (14) calcule la vitesse de rotation actuelle (28) de la machine asynchrone par le biais du couple de charge (26) du module de couple (13) et du moment interne (27) du module d'observateur (12).

2. Procédé selon la revendication 1, **caractérisé en ce que** la vitesse de rotation calculée du module de régulation orientée champ est transmise en tant que vitesse de rotation actuelle à la machine asynchrone.

3. Procédé selon les revendications 1 et 2, **caractérisé en ce que** l'inductance principale de la machine asynchrone utilisée pour les calculs dans le module d'observateur (12) est modifiée en fonction du temps, pour atténuer les oscillations du flux rotorique magnétique calculé par le module d'observateur (12).

4. Procédé selon les revendications 1 et 2, **caractérisé en ce qu'**en cas de persistance indésirable du module de régulation orientée champ (10) avec des petites fréquences de champ tournant, le couple de charge *MI(t)* (26) prédéterminé pour le module de vitesse de rotation (14) est fixé à zéro pendant un laps de temps, pour revenir à un état de fonctionnement prévu.

5. Procédé selon les revendications 1 et 2, **caractérisé en ce que** pour le calcul de la vitesse de rotation (28) dans le module de vitesse de rotation (14), l'inertie de masse du véhicule est modifiée à l'aide de la puissance électrique absorbée ou de la différence de régulation de la vitesse de rotation.

6. Procédé selon les revendications 1 et 2, **caractérisé en ce qu'**un passage du système d'observateur-régulateur au fonctionnement en générateur est facilité en augmentant la valeur de la vitesse de rotation (28) transmise au module de régulation orientée champ (10), tant que la puissance effective calculée à partir des courants de conducteur mesurés (21) et des tensions de conducteur mesurées (23) est négative et que simultanément le module de régulation (10) fonctionne toujours en mode moteur.

7. Procédé selon l'une des revendications 1 à 6, **caractérisé en ce que** la valeur de consigne pour la vitesse de rotation (20) est indiquée par un capteur de déplacement.

8. Procédé selon l'une des revendications 1 à 7, **caractérisé en ce que** la machine asynchrone (11) sert à entraîner un chariot de manutention.

9. Procédé selon l'une des revendications 1 à 8, **caractérisé en ce que** le module de couple (13) détermine la grandeur d'erreur à zéro ou approximativement à zéro.

10. Procédé selon l'une des revendications 1 à 9, **caractérisé en ce que** les valeurs de tension (22) du module de régulation orientée champ (10) dans le système de coordonnées solidaire du stator sont appliquées au module d'observateur (12) ou en cas d'utilisation des valeurs de tension mesurées (23), celles-ci sont transformées en coordonnées solidaires du stator.
